# EUROPEAN PATENT APPLICATION

(11) **EP 4 648 203 A1**
(43) Date of publication of application: **12.11.2025**
(21) Application number: 24860212.0
(22) Date of filing: 31.07.2024
(51) Int. Cl.: H01M 50/383, H01M 50/367, H01M 50/276, H01M 50/211, H01M 50/249

(54) **BATTERY PACK AND VEHICLE INCLUDING SAME**

(30) Priority: 25.08.2023 KR 20230112297
(71) Applicant: LG Energy Solution, Ltd., Seoul 07335 (KR)
(72) Inventor: YUN, Hyun-Seop, Daejeon 34122 (KR)
(74) Representative: Plasseraud IP
(86) International application number: PCT/KR2024/011272
(87) International publication number: WO 2025/048291

(57) **Abstract**

The present disclosure relates to a battery pack including: at least one battery module including a plurality of battery cells and a module case configured to accommodate the plurality of battery cells; a pack case configured to accommodate the battery module; a top cover accommodated inside the pack case and configured to cover a top of the battery module while being spaced apart from the pack case; and a deformation prevention member configured to maintain a distance between the top cover and the pack case.

## Description

### TECHNICAL FIELD

The present disclosure relates to a battery pack and a vehicle including the same.

This application is based on and claims priority from Korean Patent Application No. 10-2023-0112297, filed on August 25, 2023, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles EVs or hybrid electric vehicles HEVs that are driven by an electrical drive source, as well as in portable devices. These secondary batteries are attracting attention as a new energy source for improving eco-friendliness and energy efficiency because of the primary advantage of dramatically reducing the use of fossil fuels and another advantage of not generating by-products resulting from energy use.

Current secondary batteries widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel to increase the charge/discharge capacity. Accordingly, the number of battery cells included in the battery module or battery pack may be set in various ways depending on the required output voltage or charge/discharge capacity.

Meanwhile, since battery cells undergo chemical reactions during charging and discharging, their performance may deteriorate if they are used at a temperature higher than an appropriate temperature, and if the heat fails to be controlled at the appropriate temperature, unexpected ignition or explosion is more likely to occur. Therefore, if a thermal event such as thermal runaway occurs inside the battery pack, high-temperature gas or flame emitted from the battery cells therein may spread to adjacent battery modules, causing a chain reaction of explosions in the battery modules, which is very dangerous.

The battery module is configured by storing the battery cells in a module frame, and the battery pack accommodates these battery modules in a pack case. Conventionally, high-temperature gas or flame are discharged through venting holes provided on the top of the module frame and discharged to the outside of the pack case through a space between the pack case and the battery module. However, since the shape of the pack case is deformed by the heat of the high-temperature gas or flame, the gap between the pack case and the battery module is not maintained, making it difficult to secure a path for the high-temperature gas or flame to be discharged to the outside of the pack case.

Therefore, a structure is required to secure, when thermal runaway occurs in the battery module, a path through which the high-temperature gas or flame generated inside the battery module is discharged to the outside of the battery pack, thereby preventing thermal accumulation inside the battery pack.

In addition, it is necessary to develop a structure capable of preventing gas or flame discharged outside the battery module from flowing back into the battery module.

### DISCLOSURE

### Technical Problem

The present disclosure is designed to solve the problems of the related art, and therefore the present disclosure is directed to providing a battery pack that smoothly discharges gas or flame generated inside the battery module to the outside of the battery pack when thermal runaway occurs in the battery module, thereby effectively preventing or delaying the thermal runaway propagation between the battery modules.

In addition, the present disclosure is also to provide a battery pack capable of preventing the gas or flame discharged outside the battery module from flowing back into the battery module when thermal runaway occurs in the battery module, thereby improving safety and reliability.

In addition, the present disclosure is also to provide a vehicle including such a battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: at least one battery module including a plurality of battery cells and a module case configured to accommodate the plurality of battery cells; a pack case configured to accommodate the battery module; a top cover accommodated inside the pack case and configured to cover a top of the battery module while being spaced apart from the pack case; and a deformation prevention member configured to maintain a distance between the top cover and the pack case.

The pack case may include a bottom pack frame in a box shape having an upper opening and a pack lid configured to cover the upper opening of the bottom pack frame, and the deformation prevention member may be provided on the pack lid.

A venting path may be formed in a space between the pack lid and the top cover, and the deformation prevention member may be configured to maintain a height of the venting path.

At least a portion of the deformation prevention member may be configured to protrude from the pack lid toward the top cover so as to come into contact with an upper surface of the top cover.

A protruding length of the deformation prevention member from the pack lid may be configured to be equal to a gap between the pack lid and the top cover.

The deformation prevention member may include a protruding portion configured to protrude from the pack lid and a coupling portion configured to extend from the protruding portion and be coupled to the pack lid.

A cross-sectional area of the protruding portion may be configured to be greater than a cross-sectional area of the coupling portion.

The deformation prevention member may be configured as a rigid body.

The deformation prevention member may be made of a material having fire resistance.

The battery pack according to an embodiment of the present disclosure may further include an insulating coating layer formed on an outer surface of the deformation prevention member.

A plurality of deformation prevention members may be provided so as to be arranged to be spaced apart from each other.

The deformation prevention member may be configured in an island type.

At least one venting hole may be formed on an upper surface of the module case such that venting gas emitted from the battery cell is discharged therethrough, and the top cover may have at least one cover hole that corresponds to the venting hole and is opened by the venting gas.

The deformation prevention member may be fastened to the pack lid, and a fastening density of the deformation prevention members may be configured differently depending on a position where the cover hole is formed.

A plurality of cover holes may be provided so as to be arranged in a row along one direction, and the deformation prevention member may be provided between adjacent cover holes.

An area of the deformation prevention member projected onto the top cover may be configured to be smaller than an area of the cover hole.

The deformation prevention member may be bolted to the pack lid.

The deformation prevention member may be welded to the pack lid.

The top cover may be made of a mica material.

In addition, the present disclosure also provides a vehicle including a battery pack according to the present disclosure.

### Advantageous Effects

According to one aspect of the present disclosure, it is possible to secure a path through which high-temperature gas or flame generated inside the battery module is discharged to the outside of the battery pack when the battery module is in an abnormal state. Therefore, thermal runaway propagation between the battery modules can be effectively prevented or delayed, thereby ensuring the safety and reliability of the battery pack.

In addition, according to another aspect of the present disclosure, it is possible to prevent high-temperature gas or flame generated in the battery cell when the battery module is in an abnormal state from flowing back into the battery module.

In addition, according to another aspect of the present disclosure, events due to thermal runaway of a device equipped with the battery pack, such as fire or explosion, may be prevented or delayed.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view of a battery pack according to an embodiment of the present disclosure.
FIG. 2 is an exploded perspective view of a battery module included in a battery pack according to an embodiment of the present disclosure.
FIG. 3 is an exploded perspective view of a battery pack according to an embodiment of the present disclosure.
FIG. 4 is a partially cross-sectional view taken along line I-I' in FIG. 1, which illustrates a flow direction of venting gas or the like in the case where a deformation prevention member is provided in a battery pack according to an embodiment of the present disclosure.
FIG. 5 is a perspective view of a deformation prevention member included in a battery pack according to an embodiment of the present disclosure.
FIG. 6 illustrates a comparative example in which a deformation prevention member included in a battery pack according to an embodiment of the present disclosure is not provided.
FIG. 7 is a drawing illustrating a deformation prevention member included in a battery pack according to another embodiment of the present disclosure.
FIG. 8 is a perspective view illustrating the primary parts of a battery pack according to an embodiment of the present disclosure.
FIG. 9 is a cross-sectional view taken along line II-II' in FIG. 8.
FIG. 10 is a drawing illustrating the arrangement of deformation prevention members included in a battery pack according to another embodiment of the present disclosure.
FIG. 11 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure may include various embodiments. Redundant descriptions of substantially the same or similar components will be omitted from the respective embodiments, and the description will be made based on differences therebetween.

Meanwhile, although terms indicating directions such as upward, downward, left, right, forward, and backward directions are used in this specification, it is obvious to those skilled in the art that these terms are only for convenience of explanation and may vary depending on the position of the target object or the position of the observer.

For example, in the embodiment of the present disclosure, the X-axis direction shown in the drawing may indicate the front-back direction, the Y-axis direction may indicate the left-right direction perpendicular to the X-axis direction on the horizontal plane (X-Y plane), and the Z-axis direction may indicate the upward-downward direction (vertical direction) perpendicular to both the X-axis direction and the Y-axis direction.

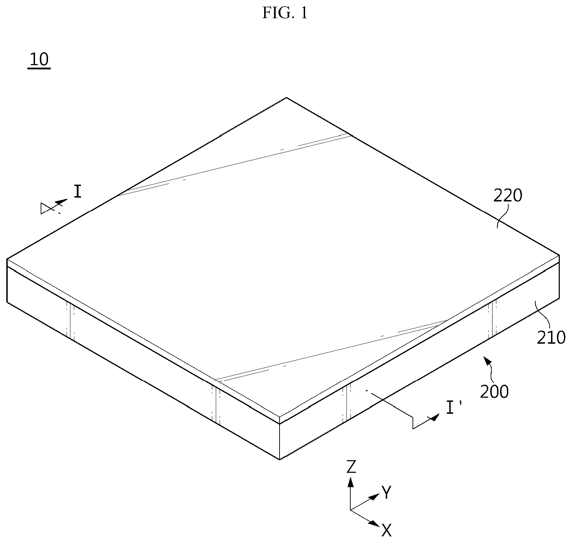

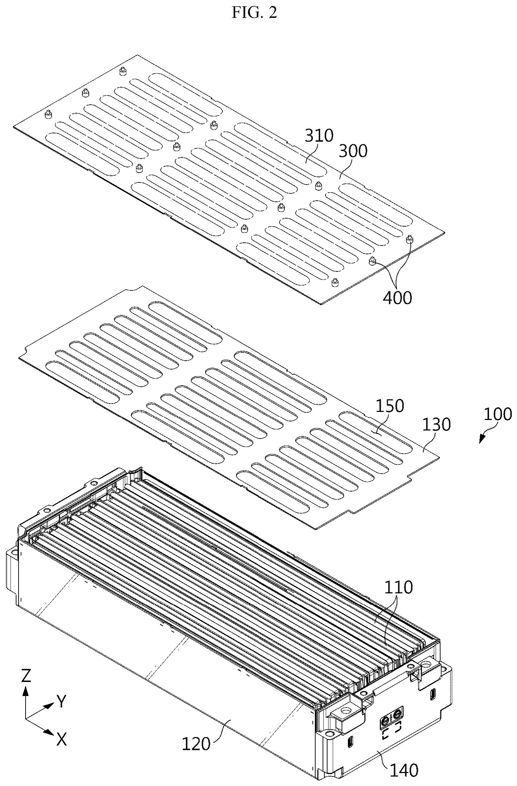

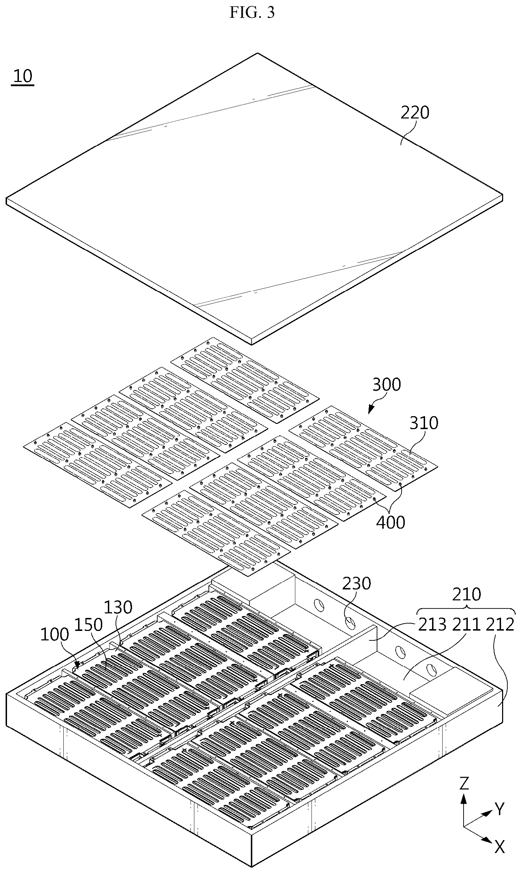

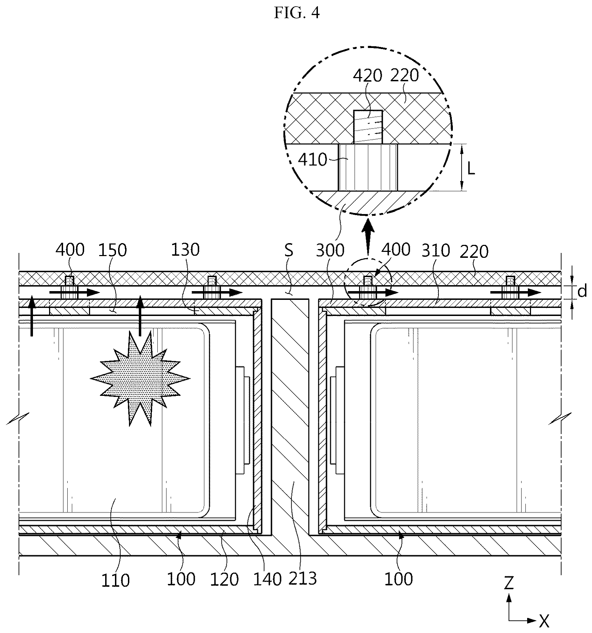

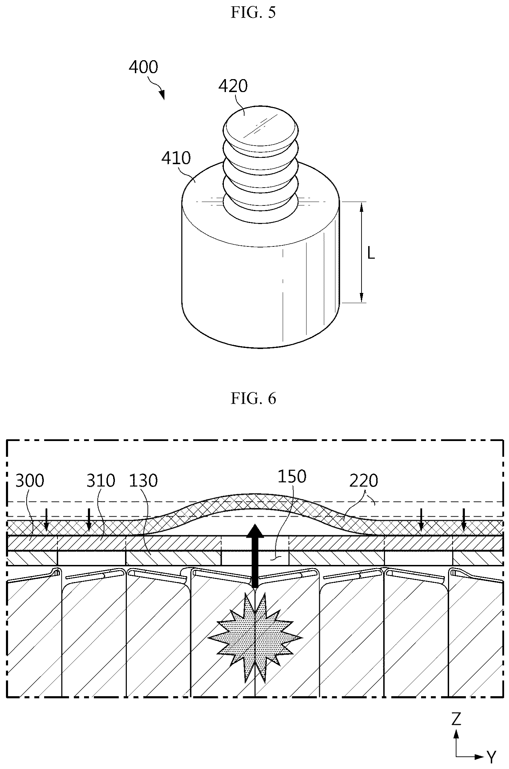

FIG. 1 is a perspective view of a battery pack according to an embodiment of the present disclosure, FIG. 2 is an exploded perspective view of a battery module included in a battery pack according to an embodiment of the present disclosure, and FIG. 3 is an exploded perspective view of a battery pack according to an embodiment of the present disclosure. In addition, FIG. 4 is a partially cross-sectional view taken along line I-I' in FIG. 1, which illustrates a flow direction of venting gas or the like in the case where a deformation prevention member is provided in a battery pack according to an embodiment of the present disclosure, and FIG. 5 is a perspective view of a deformation prevention member included in a battery pack according to an embodiment of the present disclosure.

Referring to FIGS. 1 to 3, a battery pack 10 according to an embodiment of the present disclosure may include a battery module 100, a pack case 200, a top cover 300, and a deformation prevention member 400.

First, referring to FIG. 1, the battery pack 10 according to the present disclosure may include a pack case 200. The pack case 200 constitutes the exterior of the battery pack 10. The pack case 200 may have predetermined lengths in the X-axis, Y-axis, and Z-axis directions, respectively, and may have an overall shape of approximately a cuboid. The pack case 200 may include a bottom pack frame 210 in the form of a box having an upper opening and a pack lid 220 that covers the upper opening of the bottom pack frame 210.

Referring further to FIG. 2, the battery pack 10 according to the present disclosure may include at least one battery module 100, preferably a plurality of battery modules 100. The battery modules 100 may be accommodated in the pack case 200 in FIG. 1.

In addition, each of the plurality of battery modules 100 may include a plurality of battery cells 110. In this case, the multiple battery cells 110 included in the battery module 100 may be electrically connected to each other. That is, the battery pack 10 according to the present disclosure may include multiple battery modules 100, and the plurality of battery cells 110 included in the battery pack 10 may be divided and included in the multiple battery modules 100.

The battery cell 110 may be provided in a pouch-type. A cell case of the pouch-type battery cell 110 may be configured in a pouch in which an aluminum metal layer is interposed between polymer layers.

In addition, although not shown in the drawing, the pouch-type battery cell 110 may include an electrode assembly, a cell case that accommodates the electrode assembly, and an electrode lead that is connected to the electrode assembly and extends to the outside of the cell case to function as an electrode terminal. The cell case may include a storage portion that accommodates the electrode assembly and a sealing portion that seals the periphery of the storage portion.

In this case, the plurality of battery cells 110 may be arranged side by side in the left-right direction (Y-axis direction) while standing in the vertical direction (Z-axis direction), as shown in FIG. 2. In this case, each battery cell 110 may have sealing portions directed in the front-back direction (X-axis direction) and the upward-downward direction (Z-axis direction), and a storage portion directed in the left-right direction (Y-axis direction).

Meanwhile, the present disclosure is not limited to a specific type or shape of the battery cell 110, and various battery cells 110 known at the time of filing the present disclosure may be applied to configure the battery pack 10 of the present disclosure. Although the pouch-type secondary battery, as shown in the drawing, with high energy density and easy to stack will be described in the present embodiment, it is obvious that a cylindrical or prismatic secondary battery may be applied as the battery cell 110.

In addition, the battery module 100 may include a module case 120. The module case 120 may be configured to have an inner space formed therein, so that at least some of the plurality of battery cells 110 may be accommodated in the inner space. In particular, the module case 120 may be included in each battery module 100, and may be a boundary that groups the plurality of battery cells 110 into several battery modules 100 and physically confines the inner space of each battery module 100. The module case 120 may be configured as a metal material having rigidity and heat resistance in order to physically or chemically protect the accommodated battery cells 110.

Meanwhile, referring to FIG. 2, the module case 120 may be provided as a U-frame. The U-frame-type module case 120 may be configured to cover both side surfaces and the lower surface of the battery cell 110. The module case 120 may include left and right plates covering both side surfaces of the battery cell 110, and a lower plate covering the lower surface of the battery cell 110. In addition, the left plate, the right plate, and the lower plate may be configured in an integrated form. In this case, the module case 120 may have an upper opening and front and back openings.

In this case, the battery module 100 may further include a top plate 130. In the case where the module case 120 is configured as a U-frame, the top plate 130 may be coupled to the upper opening of the module case 120. In this case, the coupling of the top plate 130 and the module case 120 may result in a square tube having front and back openings.

In addition, the module case 120 may be formed in various other shapes. For example, the module case 120 may include a box-type lower case having an upper opening, and an upper cover that closes the upper opening of the lower case. In this case, the lower case may be provided such that the left and right plates covering both side surfaces of the battery cell 110 and the front and rear plates covering the front and rear surfaces of the battery cell 110 are integrally formed.

Alternatively, the module case 120 may be provided as a mono frame. For example, the module case 120 may be configured as a square tube having an upper surface, a lower surface, a left surface, and a right surface, and having front and back openings.

Meanwhile, the battery module 100 may include an end plate 140 provided on the front and back openings of the module case 120. The end plate 140 may be welded to the module case 120. Meanwhile, although not shown in the drawings for convenience, the end plate 140 may be configured, for example, such that the inner side is made of an insulating material and outer side is made of a metal material. In addition, the end plate 140 may be partially provided with a hole or slit for exposing components that need to be exposed to the outside, such as a positive electrode terminal and a negative electrode terminal of the battery module 100 or a connector.

In addition, although not shown in the drawing, the battery module 100 may include a bus-bar assembly and/or a module terminal that is electrically connected to the plurality of battery cells 110 accommodated therein.

Meanwhile, at least one venting hole 150 may be formed in the module case 120. Preferably, a plurality of venting holes 150 may be formed. The venting holes 150 may be configured to discharge venting gas generated from the battery cell 110 to the outside of the module case 120. The venting holes 150 may be formed on one side of the module case 120, so that directional venting in one direction may be possible. For example, the venting holes 150 may be formed on the upper surface of the module case 120. In the example shown in FIG. 2, the venting holes 150 may be formed on the top plate 130. According to the above-implemented configuration of the present disclosure, the remaining portion of the module case 120, excluding the venting holes 150, is sealed, so that gas or flame may be discharged in a straight line toward the venting holes 150.

Meanwhile, referring to FIG. 3, the pack case 200 may be configured to accommodate a plurality of battery modules 100. That is, the pack case 200 may provide a space for accommodating a plurality of battery modules 100. The pack case 200 may be made of a material capable of securing mechanical strength, for example, metal such as SUS or fiber-reinforced plastic, or may include such a material in order to safely protect the battery modules 100 accommodated therein.

The bottom pack frame 210 may include a base frame 211 and a side frame 212.

The base frame 211 may be configured to have the plurality of battery modules 100 seated thereon. The base frame 211 may form the lower surface of the pack case 200 and may be configured in a square plate. In addition, the base frame 211 may have a flat upper surface so that the module case 120 may be stably seated thereon.

The side frame 212 may extend upward from respective edges of the base frame 211. The frame 212 may have multiple unit walls and may be provided to surround the plurality of battery modules 100. More specifically, the side frame 212 may include a right wall located at the end of the base frame 211 in the +Y-axis direction, a front wall located at the end thereof in the +X-axis direction, a left wall located at the end thereof in the -Y-axis direction, and a rear wall located at the end thereof in the -X-axis direction, thereby constituting the side surfaces of the pack case 200.

Meanwhile, the plurality of battery modules 100 may be disposed adjacent to each other in the front-back direction and/or left-right direction along a plurality of rows. For example, as shown in FIG. 3, the plurality of battery modules 100 may be arranged in two rows in the front-back direction (X-axis direction) and in four rows in the left-right direction (Y-axis direction).

In addition, referring to FIG. 3, the bottom pack frame 210 may include a cross-beam 213. The cross-beam 213 may be configured to partition the plurality of battery modules 100. A plurality of cross-members 213 may be provided. The cross-member 213 may be provided on the base frame 211 so as to be coupled to the base frame 211. The cross-member 213 may be bolted or welded to the base frame 211.

The pack lid 220 may be coupled to the top of the side frame 212 to form the upper surface of the pack case 200. In this case, the pack lid 220 may be provided to be spaced a predetermined distance apart from the top of the cross-beam 213 and the battery modules 100 in the vertical direction (Z-axis direction).

In addition, the pack case 200 may include a venting device 230. The venting device 230 may be provided on the side surface of the pack case 200, i.e., on the side frame 212. The venting device 230 may be configured to discharge gas generated from the stored battery cell 110 to the outside of the pack case 200. In this case, the venting device 230 may be configured to generate forcible convection. Specifically, a space may be provided between the pack lid 220 and the cross-member 213. Therefore, the gas discharged upward through the venting hole 150 of the battery module 100 may move to the space between the pack lid 220 and the cross-member 213. This gas may be discharged to the outside of the pack case 200 through the venting device 230.

Meanwhile, referring to FIGS. 2 and 3, the battery module 100 according to an embodiment of the present disclosure may further include a top cover 300.

The top cover 300 may be configured to cover the top of the battery module 100. The top cover 300 may be provided to be bonded to the top plate 130. The top cover 300 may be bonded to the top plate 130 by an adhesive member. The adhesive member may include an adhesive, an adhesive tape, or the like. In addition, the top cover 300 may be accommodated inside the pack case 200 so as to be spaced apart from the pack lid 220 in the vertical direction (Z-axis direction).

The top cover 300 may be made of a material having excellent heat resistance and/or fire resistance, such as mica or a pad of a combination of FRB (Fire Resistant Barrier) and silicon. The FRB may include an inorganic material that is easy to convert, and may be configured as a material having excellent flame retardancy and ignition resistance.

Therefore, according to the above-implemented configuration of the present disclosure, even if high-temperature heat is generated, the top cover 300 may maintain morphological stability, instead of shrinking, so that high-temperature gas or flame generated from the battery cell 110 may be stably blocked. In addition, since the top cover 300 is provided, even if a thermal event occurs inside the battery module 100, it is possible to prevent the heat such as high-temperature gas or flame from spreading to the outside.

A cover hole 310 may be formed in the top cover 300. A plurality of cover holes 310 may be provided so as to correspond to the venting holes 150. That is, the cover hole 310 may be configured to have the same shape and size as the venting hole 150 at a position where the venting hole 150 is formed. This cover hole 310 may be provided to cover the venting hole 150.

The cover hole 310 may be configured to be opened by the pressure of venting gas or flame discharged from the battery cell 110. Specifically, when gas is discharged from the venting hole 150 corresponding to the cover hole 310, only the cover hole 310 provided above the venting battery cell 110 may rupture in the top cover 300. To this end, a cut groove may be formed along the shape of the cover hole 310. Alternatively, a groove or notch may be formed as a broken line or a solid line in a portion of the cover hole 310.

As a result, in a normal state, the top cover 300 may close the venting hole 150 to protect the battery cells 110 inside the module case 120. In addition, when a thermal event occurs so that venting gas or flame is generated in some battery cells 110, the cover hole 310 is separated from the top cover 300 so as not to interfere with the path of the venting gas or flame, which moves in a straight line through the venting hole 150, thereby effectively discharging the venting gas or flame to the outside of the battery module 100. At the same time, the remaining cover holes 310 remain in the coupled state with the top cover 300, so that the discharged gas may be prevented from flowing back into the battery module 100.

As shown in FIGS. 3 to 5, the battery pack 10 of the present disclosure includes a deformation prevention member 400. The deformation prevention member 400 may be configured to maintain a distance between the top cover 300 and the pack case 200.

As described above, the top cover 300 and the pack lid 220 are spaced a predetermined distance apart from each other, so that venting gas or flame may move through the space. That is, a venting path S may be formed in the space surrounded the deformation prevention member 400, the pack lid 220, and the top cover 300. In this case, the deformation prevention member 400 may be provided on the pack lid 220 so as to maintain the height d of the venting path S constant. Here, the height d of the venting path S indicates the length in the vertical direction (Z-axis direction) and may indicate the vertical distance from the upper surface of the top cover 300 to the lower surface of the pack lid 220.

The adhesive material provided between the top plate 130 and the top cover 300 may melt due to high-temperature heat such as venting gas or flame, thereby reducing the adhesive strength. In this case, if a portion of the top cover 300 remains in the bonded state to the top plate 130 while the adhesive strength of the adhesive material is lowered, the top cover 300 may be separated from the top plate 130, so that the gap d between the pack lid 220 and the top cover 300 may decrease. In this case, the venting path S may fail to be secured, and thus the venting gas or flame may not be discharged to the outside of the battery pack 10, causing thermal runaway.

However, according to the above-implemented configuration of the present disclosure, the deformation prevention member 400 may apply pressure to the top cover 300, thereby preventing the top cover 300 from being separated from the module case 120. Accordingly, the height d of the venting path S may be secured, so that the venting gas or flame may smoothly move through the venting path S as indicated by the arrows in FIG. 4.

In addition, according to the above-implemented configuration of the present disclosure, it is possible to prevent venting gas or flame discharged outside the battery module 100 from passing through the deformed interface between the top cover 300 and the top plate 130 and flowing back into the battery module 100. Therefore, thermal runaway of battery cells 110 may be suppressed or prevented in the battery module 100. Accordingly, the safety and reliability of the battery pack 10 may be guaranteed.

The deformation prevention member 400 may be configured as a rigid body. Here, the rigid body refers to a body in contrast to an elastic body, and for example, the deformation prevention member 400 may be configured as a material of metal such as SUS or fiber reinforced plastic. As a result, the mechanical rigidity of the deformation prevention member 400 may be increased with almost no elastic deformation, so even if an external impact is applied, the gap d between the pack lid 220 and the top cover 300 may remain constant.

In addition, the deformation prevention member 400 may be made of a material having fire resistance. For example, the deformation prevention member 400 may be made of a material such as flame-retardant plastic or mica. According to the above-implemented configuration of the present disclosure, the deformation prevention member 400 may be prevented from melting or disappearing due to high-temperature heat of flame. Therefore, even if a flame occurs, the gap d between the pack lid 220 and the top cover 300 may be surely maintained by the deformation prevention member 400.

The structure of the deformation prevention member 400 will be described in detail with reference to FIGS. 4 and 5. At least a portion of the deformation prevention member 400 may be configured to protrude from the pack lid 220 toward the top cover 300 and may come into contact with the upper surface of the top cover 300.

In this case, the deformation prevention member 400 may be configured in a bolt shape. Specifically, the deformation prevention member 400 may include a protruding portion 410 that protrudes from the pack lid 220, and a coupling portion 420 that extends from the protruding portion 410 so as to be coupled to the pack lid 220. In this case, it is preferable that the protruding portion 410, which is a bolt head, have a flat head rather than a round head to secure a contact area with the top cover 300.

As shown in FIG. 4 and FIG. 5, the protruding length of the deformation prevention member 400 from the pack lid 220, i.e., the vertical height L of the protruding portion 410, may be provided to be equal to the gap d between the pack lid 220 and the top cover 300. Accordingly, the lower surface of the protruding portion 410 may be configured to come into contact with the upper surface of the top cover 300, and the upper surface of the protruding portion 410 may be configured to come into contact with the lower surface of the pack lid 220. According to the above-implemented configuration of the present disclosure, when the top cover 300 is about to be deformed and separated from the top plate 130, the lower surface of the protruding portion 410 may press the upper surface of the top cover 300, thereby preventing the top cover 300 from being deformed.

In addition, the cross-sectional area of the protruding portion 410 in the direction perpendicular to the Z-axis may be configured to be greater than the cross-sectional area of the coupling portion 420. Therefore, the protruding portion 410 may stably fix both the pack lid 220 and the top cover 300, thereby further preventing the shape from being deformed due to high-temperature heat or the like.

Meanwhile, FIG. 6 illustrates a comparative example in which a deformation prevention member included in a battery pack according to an embodiment of the present disclosure is not provided.

If the deformation prevention member 400 is not provided as shown in FIG. 6 illustrating a comparative example, when a thermal runaway occurs in the battery module 100, the shape of the pack lid 220 may be deformed due to the pressure of the gas discharged from the battery cell 110 and/or high-temperature heat such as dust or flame. For example, a portion of the pack lid 220 positioned above the venting hole 150 and cover hole 310 through which gas or flame is discharged may swell upward (in the direction indicated by the thick arrow in FIG. 6), whereas a portion adjacent thereto may sag downward (in the direction indicated by the thin arrow in FIG. 6). Accordingly, the gap between the pack lid 220 and the top cover 300 may be reduced at the portion where the pack lid 220 sags downward, failing to secure a venting path, so the venting gas or flame may be hindered from moving toward the venting device 230.

However, according to an embodiment of the present disclosure, since the coupling portion 420 of the deformation prevention member 400 is firmly coupled to the pack lid 220, the pack lid 220 may be prevented from being bent or deformed by pressure and/or heat of venting gas. Specifically, as shown in FIG. 5, the coupling portion 420 may have a thread formed thereon, and the pack lid 220 may have a thread hole corresponding to the thread, so that coupling portion 420 may be coupled to the pack lid 220. That is, the pack lid 220 is processed with a nut, and the deformation prevention member 400 having a bolt shape is engaged thereto.

Accordingly, according to the above-implemented configuration of the present disclosure, since the gap d between the pack lid 220 and the top cover 300 is maintained, the venting path S may be secured. Therefore, venting gas or flame may be smoothly discharged to the outside of the battery pack 10, thereby suppressing or preventing thermal runaway between the battery modules 100. Accordingly, the safety and reliability of the battery pack 10 may be guaranteed.

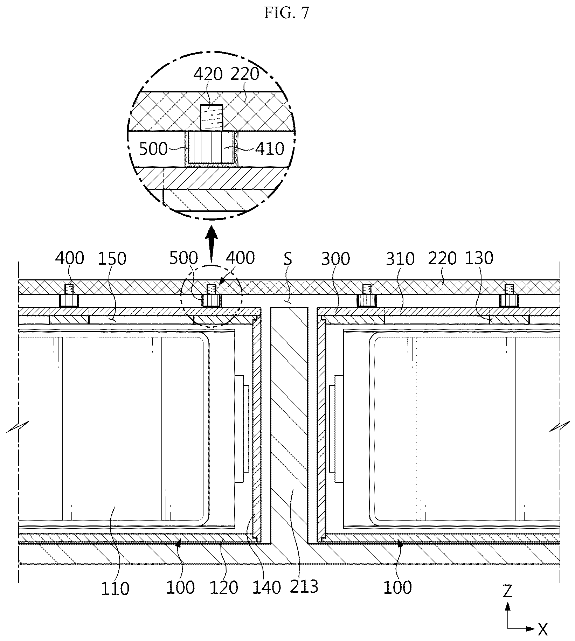

FIG. 7 is a drawing illustrating a deformation prevention member included in a battery pack according to another embodiment of the present disclosure.

Meanwhile, referring to FIG. 7, a battery pack 10 according to another embodiment of the present disclosure may include a deformation prevention member 400 on which an insulating coating layer 500 is formed. The insulating coating layer 500 may be formed on the outer surface of the deformation prevention member 400. The insulating coating layer 500 may be configured to electrically insulate the deformation prevention member 400 and prevent heat conduction or the like. To this end, the insulating coating layer 500 may be made of a material such as polyurethane or silicone.

As shown in FIG. 7, the insulating coating layer 500 may be formed on a portion of the deformation prevention member 400, which is exposed from the pack lid 220. That is, the insulating coating layer 500 may be formed on the remaining surface of the protruding portion 410, excluding the surface where the protruding portion 410 is in contact with the pack lid 220. For example, the insulating coating layer 500 may be provided to surround the lower surface and the side surface of the protruding portion 410. According to the above-implemented configuration of the present disclosure, since the insulating coating layer 500 is provided, it is possible to reliably maintain the insulation and/or heat conduction prevention effect in the portion where the deformation prevention member 400 is exposed to venting gas or flame.

The insulating coating layer 500 may be a coating layer that is directly foamed on the outer surface of the deformation prevention member 400 after assembling the deformation prevention member 400 to the pack lid 220. According to the above-implemented configuration of the present disclosure, the outer surface of the deformation prevention member 400 may be easily covered, compared to attaching a separately prepared sheet-type insulating member. In addition, a process of separately manufacturing the insulating member conforming to the size of the outer surface of the deformation prevention member 400 may be omitted, thereby reducing the cost and time when manufacturing the battery module.

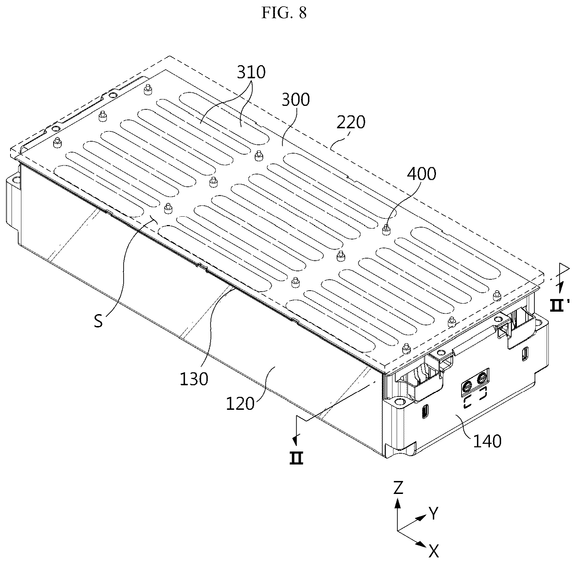

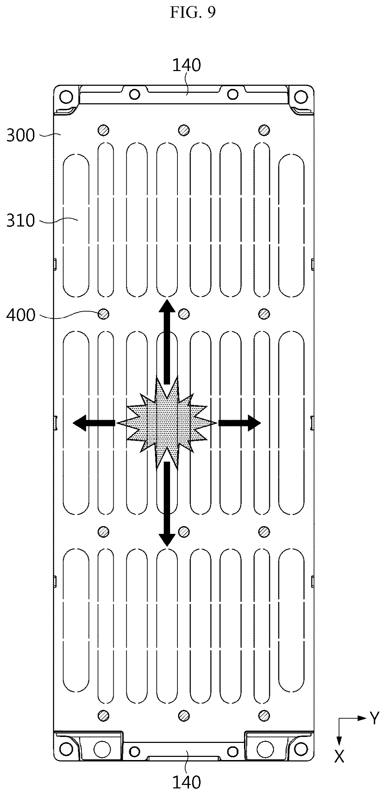

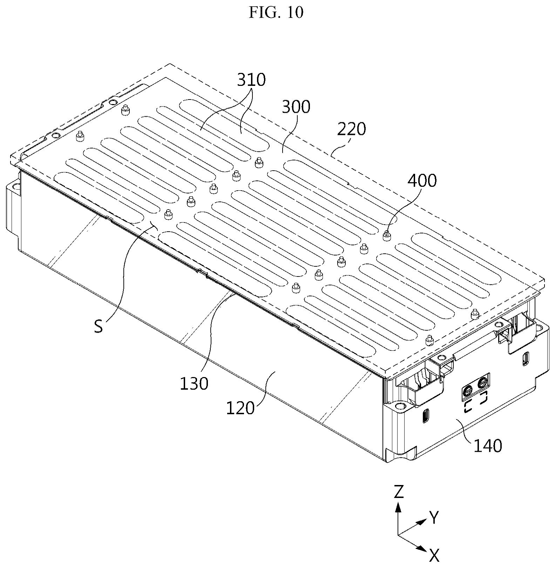

FIG. 8 is a perspective view illustrating the primary parts of a battery pack according to an embodiment of the present disclosure, and FIG. 9 is a cross-sectional view taken along line II-II' in FIG. 8. In addition, FIG. 10 is a drawing illustrating the arrangement of deformation prevention members included in a battery pack according to another embodiment of the present disclosure.

Referring to FIGS. 8 to 10, a plurality of deformation prevention members 400 may be arranged to be spaced apart from each other. The deformation prevention member 400 may be configured as an island type. According to the above-implemented configuration of the present disclosure, since the deformation prevention member 400 is configured in an island shape, instead of a long beam shape, the position of the deformation prevention member 400 may be freely set. Therefore, the degree of design freedom may increase, thereby improving productivity. The deformation prevention member 400 may be isotropic on the X-Y plane. When coupling the deformation prevention member 400 to the pack lid 220, the direction of the deformation prevention member 400 does not need to be considered, and thus the assembling efficiency is improved.

The deformation prevention member 400 may be welded to the pack lid 220. Alternatively, the deformation prevention member 400 may be bolted to the pack lid 220. According to the above-implemented configuration of the present disclosure, even if the deformation prevention member 400 is incorrectly assembled to the pack lid 220, it may be easily disassembled and corrected, and thus the assembling efficiency may be improved when manufacturing the battery pack 10.

In this case, the density (fastening density) at which the deformation prevention members 400 are fastened to the pack lid 220 may be configured differently depending on the position where the cover hole 310 is formed. Here, the fastening density may refer to the number of deformation prevention members 400 per unit area of the pack lid 220 or the area occupied by the deformation prevention members 400. The areas or number of the deformation prevention members 400 may be freely adjusted depending on the areas or number of the cover holes 310. For example, as shown in the embodiment in FIG. 10, a portion where the top cover 300 is likely to be deformed may be checked in advance through an experiment, and then the battery pack 10 may be manufactured such that the deformation prevention members 400 are more densely provided in the corresponding portion. According to the above-implemented configuration of the present disclosure, the degree of design freedom may be increased, thereby further improving productivity, and the design of other portions of the battery pack 10 does not need to be changed, thereby obtaining higher flexibility to respond to event situations.

Specifically, the deformation prevention members 400 may be provided between adjacent cover holes 310 among the plurality of cover holes 310. That is, the deformation prevention member 400 may be provided at a portion of the top cover 300 adjacent to the cover hole 310. For example, as shown in FIGS. 8 and 9, a plurality of cover holes 310 may be arranged in a row in the front-back direction (X-axis direction), and three deformation prevention members 400 may be provided in each portion between adjacent cover holes 310 in the left-right direction (Y-axis direction), among the cover holes 310 arranged in a row. In addition, the deformation prevention members 400 may also be provided at both ends of the top cover 300 in the front-back direction (X-axis direction).

When venting gas or flame is discharged from the venting hole 150, a portion of the top cover 300, which is adjacent to the cover hole 310 rupturing due to the heat of the venting gas or flame, is more likely to be deformed and separated from the top plate 130. Therefore, as the deformation prevention member 400 is provided in the portion adjacent to the cover hole 310 as in the above-implemented configuration of the present disclosure, it is possible to effectively prevent the portion of the top cover 300 adjacent to the cover hole 310 from being deformed.

Referring to FIG. 9, the area of the deformation prevention member 400 projected onto the top cover 300 may be configured to be smaller than the area of the cover hole 310. More specifically, the cross-sectional area of the protruding portion 410 of the deformation prevention member 400 may be configured to be smaller than the area of the space between the adjacent cover holes 310. Accordingly, the deformation prevention member 400 may not cover the venting hole 150 or the cover hole 310, and thus may not hinder venting gas or flame from being discharged through the venting hole 150 or the cover hole 310.

Accordingly, since the deformation prevention members 400 are provided in a local area of the top cover 300, venting gas or flame may move between the deformation prevention members 400 as shown by the arrows in FIG. 9. That is, according to the above-implemented configuration of the present disclosure, the venting path S may be further secured, so that thermal runaway propagation between the battery modules 100 may be effectively prevented or delayed.

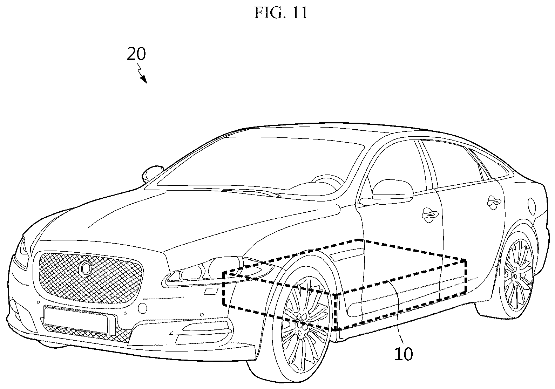

FIG. 11 is a schematically perspective view of a vehicle including a battery pack according to an embodiment of the present disclosure.

Referring to FIG. 11, a vehicle 20 according to an embodiment of the present disclosure may include one or more battery packs 10 according to an embodiment of the present disclosure or one or more battery modules 100 according to an embodiment of the present disclosure. The vehicle 20 according to the present disclosure may be, for example, an electric vehicle, a hybrid vehicle, or a plug-in hybrid vehicle. The vehicle 20 includes a four-wheel vehicle and a two-wheel vehicle. The vehicle 20 drives by receiving power from the battery pack 10 or battery module 100 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack comprising:
at least one battery module comprising a plurality of battery cells and a module case configured to accommodate the plurality of battery cells;
a pack case configured to accommodate the battery module;
a top cover accommodated inside the pack case and configured to cover a top of the battery module while being spaced apart from the pack case; and
a deformation prevention member configured to maintain a distance between the top cover and the pack case.

2. The battery pack according to claim 1,
wherein the pack case comprises
a bottom pack frame in a box shape having an upper opening, and
a pack lid configured to cover the upper opening of the bottom pack frame, and
wherein the deformation prevention member is provided on the pack lid.

3. The battery pack according to claim 2,
wherein a venting path is formed in a space between the pack lid and the top cover, and
wherein the deformation prevention member is configured to maintain a height of the venting path.

4. The battery pack according to claim 2,
wherein at least a portion of the deformation prevention member is configured to protrude from the pack lid toward the top cover so as to come into contact with an upper surface of the top cover.

5. The battery pack according to claim 4,
wherein a protruding length of the deformation prevention member from the pack lid is configured to be equal to a gap between the pack lid and the top cover.

6. The battery pack according to claim 2,
wherein the deformation prevention member comprises
a protruding portion configured to protrude from the pack lid, and
a coupling portion configured to extend from the protruding portion and be coupled to the pack lid.

7. The battery pack according to claim 6,
wherein a cross-sectional area of the protruding portion is configured to be greater than a cross-sectional area of the coupling portion.

8. The battery pack according to claim 1,
wherein the deformation prevention member is configured as a rigid body.

9. The battery pack according to claim 1,
wherein the deformation prevention member is made of a material having fire resistance.

10. The battery pack according to claim 1,
further comprising an insulating coating layer formed on an outer surface of the deformation prevention member.

11. The battery pack according to claim 1,
wherein a plurality of deformation prevention members are provided so as to be arranged to be spaced apart from each other.

12. The battery pack according to claim 11,
wherein the deformation prevention member is configured in an island type.

13. The battery pack according to claim 2,
wherein at least one venting hole is formed on an upper surface of the module case such that venting gas emitted from the battery cell is discharged therethrough, and
wherein the top cover has at least one cover hole that corresponds to the venting hole and is opened by the venting gas.

14. The battery pack according to claim 13,
wherein the deformation prevention member is fastened to the pack lid, and
wherein a fastening density of the deformation prevention members is configured differently depending on a position where the cover hole is formed.

15. The battery pack according to claim 14,
wherein a plurality of cover holes are provided so as to be arranged in a row along one direction, and
wherein the deformation prevention member is provided between adjacent cover holes.

16. The battery pack according to claim 15,
wherein an area of the deformation prevention member projected onto the top cover is configured to be smaller than an area of the cover hole.

17. The battery pack according to claim 14,
wherein the deformation prevention member is bolted to the pack lid.

18. The battery pack according to claim 14,
wherein the deformation prevention member is welded to the pack lid.

19. The battery pack according to claim 13,
wherein the top cover is made of a mica material.

20. A vehicle comprising a battery pack according to any one of claims 1 to 19.
